# EUROPEAN PATENT APPLICATION

(11) **EP 3 525 527 A1**
(43) Date of publication of application: **14.08.2019**
(21) Application number: 17863775.7
(22) Date of filing: 18.10.2017
(51) Int. Cl.: H04W 64/00, H04W 4/02

(54) **POSITIONING METHOD, POSITIONING DEVICE AND ACCESS POINT (AP)**

(30) Priority: 31.10.2016 CN 201610933243
(71) Applicant: Huawei Technologies Co., Ltd., Longgang District Shenzhen, Guangdong 518129 (CN)
(72) Inventor: WEI, Hanyu, Shenzhen Guangdong 518129 (CN); WANG, Hao, Shenzhen Guangdong 518129 (CN); ZHUANG, Zhe, Shenzhen Guangdong 518129 (CN)
(74) Representative: Körber, Martin Hans
(86) International application number: PCT/CN2017/106728
(87) International publication number: WO 2018/077099

(57) **Abstract**

The present invention provides a positioning method, a positioning apparatus, and an access point AP. The method includes: receiving a first distance parameter that is sent by a first AP and that is used to represent a first distance between the first AP and a first terminal device connected to the first AP at a first moment, and receiving a second distance parameter that is sent by a second AP and that is used to represent a second distance between the second AP and the first terminal device connected to the second AP at a second moment, where the first AP and the second AP are a same AP or different APs; receiving a status parameter of the first terminal device within a time from the first moment to the second moment, where the status parameter includes speed information of the first terminal device within the time from the first moment to the second moment, and an included angle between a moving direction and a reference direction; and determining first coordinates and/or second coordinates based on pre-obtained coordinates of the first AP, pre-obtained coordinates of the second AP, the first distance parameter, the second distance parameter, and the status parameter. According to the method, high-precision and low-cost positioning may be implemented.

## Description

### TECHNICAL FIELD

The present invention relates to the field of communications technologies, and in particular, to a positioning method, a positioning apparatus, and an access point AP.

### BACKGROUND

With development of mobile communications technologies and popularization of intelligent terminals, mobile network services are increasingly abundant, so that people's life becomes more convenient. Positioning services are widely used, for example, traffic navigation, geographical position retrieval, and position information sharing. Because people spend most of time indoors, 80% of phone services and data Internet access services come from indoors. Therefore, an indoor positioning application also gradually becomes a demand hotspot, and has abundant services, for example, position navigation in a large shopping mall or an airport, room searching in a large office building, searching of a parking space, retrieval of a shop or a person position in a downtown, and shopping navigation in a supermarket. These applications require higher positioning precision, for example, a positioning error that is less than 5 meters or even within 1 meter, so that good user experience is obtained.

Currently, an area coverage of Wireless Fidelity (English: Wireless Fidelity, WiFi for short) has reached 90%. This provides infrastructure for the indoor positioning application. Therefore, an indoor positioning solution based on a WiFi technology becomes a technical solution most widely deployed in the industry.

Currently, WiFi-based positioning technology solutions in the market may be divided into two types based on different deployment modes: A first type is network side positioning, that is, a network side device senses and detects a terminal, and a position of the terminal relative to the network side device is calculated by using detected WiFi feature data, so as to perform positioning on the terminal. A second type is terminal side positioning, that is, a terminal implements position calculation of the terminal by using data collected by the terminal, and the data includes but is not limited to feature information such as a wireless signal, inertial data, a Global Positioning System (Global Positioning System, GPS), and a map.

A typical representative of the first type is a received signal strength indicator (English: Received Signal Strength Indicator, RSSI for short) multi-point positioning method. A basic principle of the RSSI multi-point positioning method is as follows: In a propagation process of a WiFi signal, signal strength is not evenly distributed and features fading statistics, that is, strength of the WiFi signal distributed around an access point (English: Access Point, AP for short) in one WiFi network varies as a position changes. The AP may measure an RSSI value of a positioned terminal based on distribution data of the signal strength, to delineate a rough range of a position, in an area covered by the AP, in which the positioned terminal is located. When a plurality of APs (generally more than three APs) can simultaneously cover the positioned terminal, the plurality of APs separately delineate a range of the position of the positioned terminal based on the RSSI, and perform positioning on the positioned terminal by using a common triangle positioning method. A disadvantage of the solution is low precision. If an environment is complex, distribution of field strength of the WiFi signal is unstable, and consequently a relatively large error is caused when position determining relying on the WiFi signal strength is performed. In addition, when the plurality of APs perform positioning, all APs need to work on a same channel. However, when signals have overlapped coverage, the APs need to use different channels to avoid mutual interference. Consequently, the terminal cannot be precisely positioned by using the plurality of APs.

A typical representative of the second type is a fingerprint positioning method. A general principle of the fingerprint positioning method is as follows: In an offline phase, a user installs client software provided by an application developer on a terminal, uses the software in an area specified by the developer, and performs a corresponding action based on a software prompt (for example, based on the prompt, walking, turning, and reaching a specified position, such as a corner). In a process of using the software, an RSSI of WiFi around a user position, GPS information, cell information, information about an AP, and coordinates of the user position are collected from the terminal of the user and a feedback of the user by using the client software; a mapping table is established between the user position {Xi, Yi} and the foregoing various information such as the collected RSSI of the WiFi; and the mapping table is uploaded to a fingerprint library established by the developer. Further, the user needs to upload indoor map information of the user position to a map library established by the developer. In an online phase, a user that needs to perform positioning uses the client software on the positioned terminal to collect information such as an RSSI of WiFi at a position at which the positioned terminal is located, GPS information, cell information, information about an AP, and coordinates of a user position; calculates the information by using a specific algorithm; and matches a calculation result with corresponding information stored in the fingerprint library of the developer, such as the RSSI of the WiFi, the GPS information, the cell information, the information about the AP, and the coordinates of the user position. If the matching succeeds, it indicates that the positioned terminal is currently located in a corresponding position in the fingerprint library, and the positioning succeeds. Disadvantages of the solution are high costs and relatively low positioning precision. For the high costs, a large amount of fingerprint learning is required in an initial stage, information about a positioning area needs to be continuously refreshed in a later stage, and the information is synchronized to the fingerprint library. Therefore, maintenance costs are high. For unstable positioning precision, terminals have a great difference, and therefore signals collected at a same position may have a great difference. Consequently, positioning precision is reduced. In addition, if an environment of a positioned area changes, fingerprint information in the environment is inconsistent with information during collection, and consequently positioning precision is reduced.

It can be learned from the foregoing description that a mainstream positioning method in the prior art has technical problems of low positioning precision and high costs.

### SUMMARY

Embodiments of the present invention provide a positioning method, a positioning apparatus, and an access point AP, to resolve a technical problem that positioning precision of a positioning method in the prior art is low.

According to a first aspect, an embodiment of the present invention provides a positioning method. The method is described from a perspective of a positioning apparatus. In the method, a first distance parameter that is sent by a first access point AP and that is used to represent a first distance between the first AP and a first terminal device connected to the first AP at a first moment is received, and a second distance parameter that is sent by a second AP and that is used to represent a second distance between the second AP and the first terminal device connected to the second AP at a second moment is received. The first terminal device is connected to the first AP at the first moment, and the first terminal device is connected to the second AP at the second moment. The first AP and the second AP are a same AP or different APs. In addition, a status parameter of the first terminal device within a time from the first moment to the second moment is further received. The status parameter includes speed information of the first terminal device within the time from the first moment to the second moment, and an included angle between a reference direction and a direction from first coordinates of the first terminal device at the first moment to second coordinates of the first terminal device at the second moment. Then, the first coordinates and/or the second coordinates are determined based on pre-obtained coordinates of the first AP, pre-obtained coordinates of the second AP, the first distance parameter, the second distance parameter, and the status parameter. In this solution, because the AP and the terminal device provide together a parameter required in positioning, for example, a distance parameter and a status parameter, and then the positioning apparatus performs positioning. Compared with a fingerprint positioning on a terminal device side in which positioning is performed by a plurality of APs in the prior art, the positioning method in this embodiment of the present invention has high positioning precision. Further, only one AP or two APs participate in a positioning process, so that costs of positioning service deployment are reduced, and deployment difficulty is reduced.

In a possible design, before the first distance parameter and the second distance parameter are received, request information is further sent to the first AP and the second AP, where the request information is used to request the first distance parameter, the second distance parameter, and the status parameter from the APs. Correspondingly, the receiving a status parameter of the first terminal device within a time from the first moment to the second moment includes: receiving a first status parameter that is sent by the first AP and that is of the first terminal device at the first moment, and receiving a second status parameter that is sent by the second AP and that is of the first terminal device at the second moment, where the status parameter includes the first status parameter and the second status parameter. According to the method, the AP feeds back the distance parameter and the status parameter based on the received request information, so that resources of the AP may be saved. In addition, the AP forwards the status parameter of the terminal device. In this way, the positioning apparatus does not need to establish a connection to the first terminal device, but the AP has established a connection to the first terminal device, and therefore it is more convenient for the AP to forward the status parameter of the first terminal device.

In a possible design, before the first distance parameter and the second distance parameter are received, first request information is further sent to the first AP and the second AP, where the first request information is used to request the first distance parameter and the second distance parameter from the first AP and the second AP; and second request information is sent to the first terminal device, where the second request information is used to request the status parameter from the first terminal device. Correspondingly, the receiving a status parameter of the first terminal device within a time from the first moment to the second moment includes: receiving the status parameter that is sent by the first terminal device and that is of the first terminal device within the time from the first moment to the second moment. According to the method, the positioning apparatus separately requests the distance parameter from the AP and requests the status parameter from the first terminal device, and therefore the first terminal device reports the status parameter to the positioning apparatus. According to the method, the AP and the first terminal device start to report a parameter only when there is a positioning requirement, so that resources are saved. In addition, the first terminal device reports the status parameter to the positioning apparatus, and a delay is relatively small, so that data is more accurate.

In a possible design, before the first distance parameter and the second distance parameter are received, the method further includes: receiving a positioning request sent by the first terminal device. According to the method, the positioning apparatus starts a positioning procedure only when the positioning request sent by the first terminal device is received, so that a waste of resources is avoided.

In a possible design, before the first distance parameter and the second distance parameter are received, the method further includes: receiving connection information of the first terminal device sent by the first AP; initiating a connection request to the first terminal device based on the connection information; and after a connection to the first terminal device is established, receiving capability information sent by the first terminal device, where the capability information is used to represent whether the first terminal device can provide the status parameter. According to the method, the positioning apparatus may obtain the capability information of the first terminal device, and therefore the positioning apparatus may subsequently request, based on a capability of the first terminal device, the first terminal device to report content or a type of the status parameter.

In a possible design, the first distance parameter and the second distance parameter are distance parameters that are obtained based on a fine timing measurement FTM mechanism. A granularity of a time measured by the FTM mechanism may reach a nanosecond (ns) level, and therefore a granularity of a calculated distance is 3 centimeters. Therefore, a distance determined by using the method has high precision, so that positioning precision of the positioning method based on the distance is improved.

According to a second aspect, an embodiment of the present invention provides a positioning method. The method is described from a perspective of an AP. In the method, if the AP is one of APs participating in positioning, the AP obtains a first distance parameter that is used to represent a first distance between a first terminal device connected to the AP and the AP at a first moment, where the first distance parameter is used to determine first coordinates of the first terminal device at the first moment. Then, the first distance parameter is sent to a positioning apparatus that manages the AP. According to the method, the positioning apparatus subsequently performs high-precision positioning based on the first distance parameter.

In a possible design, if the AP connected to the first terminal device does not change, the AP obtains a second distance parameter that is used to represent a second distance between the first terminal device connected to the AP and the AP at a second moment, where the second distance parameter is used to determine second coordinates of the first terminal device at the second moment. Then, the second distance parameter is sent to the positioning apparatus. According to the method, the positioning apparatus subsequently performs high-precision positioning based on the first distance parameter. Further, according to the method, a positioning operation may be implemented when only one AP participates in the positioning, so that costs are reduced.

In a possible design, the AP may forward a status parameter of the first terminal device, and the AP is one of APs participating in positioning. The method further includes: receiving, by the AP, a first status parameter that is sent by the first terminal device and that is of the first terminal device at the first moment, where the first status parameter is used to determine first coordinates of the first terminal device at the first moment; and sending, by the AP, the first status parameter to the positioning apparatus.

In a possible design, the AP may forward a status parameter of the first terminal device, and the AP fully participates in positioning. The method further includes: receiving, by the AP, a first status parameter of the first terminal device at the first moment and a second status parameter of the first terminal device at the second moment that are sent by the first terminal device, where the first status parameter and the second status parameter are used to determine first coordinates of the first terminal device at the first moment and second coordinates of the first terminal device at the second moment; and sending, by the AP, the first status parameter and the second status parameter to the positioning apparatus.

In a possible design, the obtaining, by an AP, a first distance parameter includes: sending, by the AP, a fine timing measurement FTM frame to the first terminal device at the first moment; receiving, by the AP, a test response that is sent by the first terminal device based on the FTM frame; and determining, by the AP, the first distance parameter based on the first moment and a moment at which the test response is received. The second distance parameter may be further determined by using the same method. The distance parameter determined by using the method has high precision, so that the positioning method based on the distance parameter has high precision.

In a possible design, if the AP forwards a status parameter of the first terminal device, before the AP receives the first status parameter, the method further includes: receiving, by the AP, capability information of the first terminal device sent by the first terminal device, where the capability information is used to represent whether the first terminal device can provide the first status parameter. The AP may request, based on the capability information of the first terminal device, the first terminal device to report content or a type of the status parameter.

According to a third aspect, an embodiment of the present invention further provides a positioning method. The method is described from a perspective of a terminal device. According to the method, the terminal device obtains a status parameter of the terminal device, and sends the status parameter to an AP connected to the terminal device or a positioning apparatus. The status parameter may include speed information and a moving direction within a time from a first moment to a second moment.

In a possible design, before the terminal device obtains the status parameter of the terminal device, the terminal device further receives request information sent by the positioning apparatus or the AP. The terminal device may obtain and report the status parameter based on the request information.

In a possible design, before the terminal device obtains the status parameter of the terminal device, the terminal device further sends a positioning request to the positioning apparatus, to enable a positioning procedure.

According to a fourth aspect, an embodiment of the present invention provides a positioning apparatus. The positioning apparatus may be an AP, an AC, or an OLT. The positioning apparatus includes a transmitter, a receiver, and a processor. The transmitter may be configured to perform the step of sending or reporting in the positioning method in the first aspect. The receiver may perform the step of receiving or obtaining in the positioning method in the first aspect. The processor may perform the step of obtaining or determining in the positioning method in the first aspect.

According to a fifth aspect, an embodiment of the present invention provides an AP. The AP includes a transmitter, a receiver, and a processor. The transmitter may be configured to perform the step of sending or reporting in the positioning method in the second aspect. The receiver may perform the step of receiving or obtaining in the positioning method in the second aspect. The processor may perform the step of obtaining or determining in the positioning method in the second aspect.

According to a sixth aspect, an embodiment of the present invention provides a terminal device. The terminal device includes a transmitter, a receiver, and a processor. The transmitter may be configured to perform the step of sending or reporting in the positioning method in the third aspect. The receiver may perform the step of receiving or obtaining in the positioning method in the third aspect. The processor may perform the step of obtaining or determining in the positioning method in the third aspect.

According to a seventh aspect, an embodiment of the present invention provides a positioning apparatus, and the positioning apparatus includes function modules configured to implement the method in the first aspect.

According to an eighth aspect, an embodiment of the present invention further provides a positioning apparatus, and the positioning apparatus includes function modules configured to implement the method in the second aspect.

According to a ninth aspect, an embodiment of the present invention further provides a positioning apparatus, and the positioning apparatus includes function modules configured to implement the method in the third aspect.

According to a tenth aspect, an embodiment of the present invention further provides a computer storage medium, where the computer storage medium stores program code, and the program code includes an instruction used to implement any possible implementation of the method in the first aspect, the second aspect, or the third aspect.

### BRIEF DESCRIPTION OF DRAWINGS

FIG. 1 is a structural diagram of a positioning system according to an embodiment of the present invention;
FIG. 2a to FIG. 2c are schematic diagrams of deployment of a positioning system according to an embodiment of the present invention;
FIG. 3 is a diagram of a specific example of a positioning system according to an embodiment of the present invention;
FIG. 4 is a structural diagram of a communications device according to an embodiment of the present invention;
FIG. 5 is a schematic diagram of information exchange between devices before positioning according to an embodiment of the present invention;
FIG. 6 is a flowchart of a positioning method according to an embodiment of the present invention;
FIG. 7 is a flowchart of an instance of a positioning method according to an embodiment of the present invention;
FIG. 8 is a schematic diagram of calculating a position of a terminal device according to an embodiment of the present invention;
FIG. 9 is a flowchart of an instance of another positioning method according to an embodiment of the present invention;
FIG. 10A and FIG. 10B are a flowchart of an instance of still another positioning method according to an embodiment of the present invention; and
FIG. 11 is a functional block diagram of a positioning apparatus according to an embodiment of the present invention.

### DESCRIPTION OF EMBODIMENTS

Embodiments of the present invention provide a positioning method, a positioning apparatus, and an access point AP, to resolve a technical problem that positioning precision of a positioning method in the prior art is low.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes in detail implementation processes and objectives of solutions in the embodiments of the present invention.

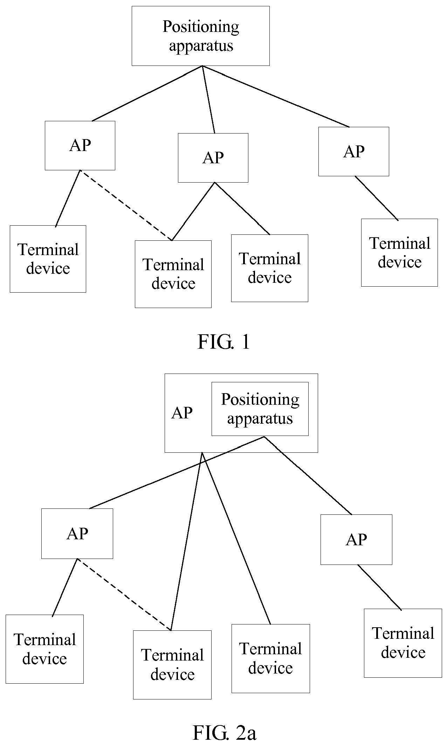

A positioning method provided in the embodiments of the present invention may be applied to a positioning system. As shown in FIG. 1, the positioning system includes a positioning apparatus, an AP managed by the positioning apparatus, and a terminal device connected to the AP. There may be one or more APs in a management range of the positioning apparatus. A quantity of terminal devices connected to each AP is also set based on an actual capability of the AP and a requirement, and therefore any quantity of terminal devices may be connected to each AP. A terminal device may be connected to any AP, and generally, the terminal device may be connected to an AP whose coverage area covers the terminal device. If there are a plurality of APs covering a terminal device, a user may select to connect to one of the APs. Therefore, in a moving process, the terminal device may be sequentially connected to the plurality of APs.

Specifically, the terminal device is a common user terminal, for example, a smartphone, a tablet computer, or a wearable smart device (for example, a smart band, a smart necklace, and smart glasses). The terminal device may access the Internet by using WiFi. The terminal device may include at least one micro electro mechanical system (English: Micro Electro Mechanical System, MEMS for short). The MEMS may be, for example, a gyroscope, an accelerometer, or an electronic compass. By using the MEMS, the terminal device may obtain a status parameter of the terminal device, such as a speed, a moving direction, or a rotation angle. The terminal device may send the status parameter of the terminal device to an AP connected to the terminal device, or send the status parameter to a positioning apparatus that manages the AP.

The AP is a WiFi network access point, and is configured to: scan the terminal device, and sense and authenticate the terminal device. Further, the AP is further configured to: obtain a distance parameter that is used to represent a distance between the AP and the terminal device, and send the distance parameter to the positioning apparatus that manages the AP.

The positioning apparatus may be a software service running on a device, may be an independent device, or may be a function module integrated into another network element. The positioning apparatus is responsible for managing an AP registered in the positioning apparatus and information about the terminal device sensed by the AP, and storing various information reported by the managed AP and the terminal device. The information includes, for example, the status parameter and the distance parameter. The positioning apparatus may calculate a position of the terminal device based on the status parameter and the distance parameter, so as to complete a positioning service.

According to the positioning method in the embodiments of the present invention, the positioning apparatus may comprehensively consider a status parameter sent by a positioned terminal device and distance parameter information sent by an AP connected to the positioned terminal device, so as to determine coordinates of the positioned terminal device. Compared with a prior-art positioning method in which the AP connected to the positioned terminal device independently performs positioning or in which the positioned terminal device independently collects data to calculate coordinates, the positioning method in the embodiments has higher positioning precision.

In actual deployment, the positioning apparatus may exist as a separate device, for example, a separate positioning server. The positioning apparatus may alternatively be a function module embedded into an existing network device. For example, referring to FIG. 2a, the positioning apparatus may be deployed on an AP. In this case, in addition to implementing a general function of the AP, the AP implements a function of managing another AP and a terminal device covered by the another AP, for example, provides a positioning function for a terminal device connected to the AP.

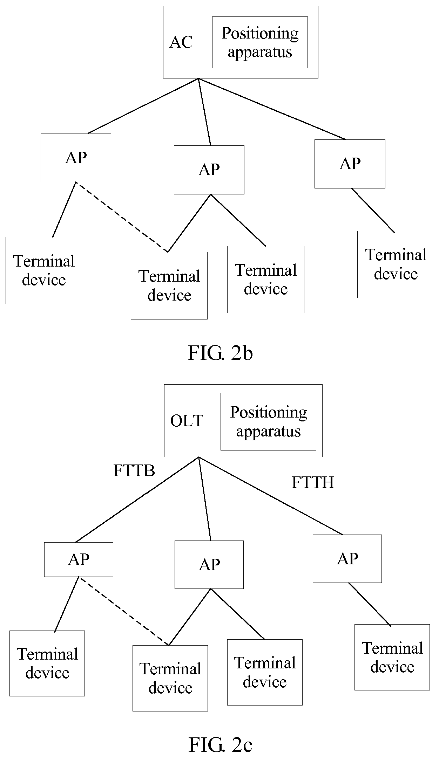

For another example, as shown in FIG. 2b, the positioning apparatus may alternatively be deployed on an access controller (English: Access Control, AC for short). The AC is generally responsible for functions such as AP configuration, monitoring, management, roaming, and statistics. When the positioning apparatus is deployed on the AC, in addition to implementing a general function, the AC may implement a positioning function.

For another example, as shown in FIG. 2c, when the terminal device is in a home, an office, or various fixed fiber access network places such as fiber to the home (English: Fiber To The Home, FTTH for short) or fiber to the building (English: Fiber To The Building, FTTB for short), the positioning apparatus may be deployed on an optical line terminal (English: Optical Line Terminal, OLT for short). The OLT connects to an aggregation switch on an access side, converts an electrical signal into an optical signal, connects to an optical fiber client device on the access side, and further performs a function such as management and test on a client device. One OLT device may manage positioning services of terminal devices of one or several buildings. For the FTTB, the AP and the OLT may be connected by using a wired network, or the AP and the OLT may be connected by using a forwarding device.

It should be noted that, in FIG. 1 to FIG. 2c, a solid line between a terminal device and an AP indicates that the terminal device is connected to the AP, and a dashed line between the terminal device and an AP indicates that the terminal device can be further sensed by the AP. Further, the terminal device may move. Therefore, a connection relationship between the terminal device and the AP is not fixed and changes, for example, a connection between the terminal device and the AP in the solid line may be switched to a connection between the terminal device and the AP in the dashed line.

It may be learned from the foregoing description that the positioning apparatus in the embodiments may be deployed on a plurality of existing network elements, so as to implement large-scale positioning service deployment.

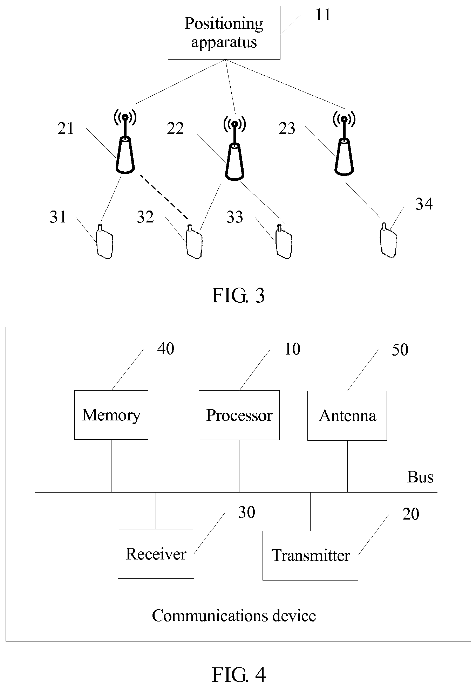

Referring to FIG. 3, FIG. 3 is a possible structural diagram of a positioning system according to an embodiment of the present invention. As shown in FIG. 1, the positioning system includes a positioning apparatus 11, an AP 21, an AP 22, an AP 23, and a terminal device 31 to a terminal device 34. The positioning apparatus 11 may manage the AP 21, the AP 22, and the AP 23. The AP 21 is currently connected to the terminal device 31, but can also sense the terminal device 32 (represented by a dashed line in FIG. 3). The AP 22 is currently connected to the terminal device 32 (represented by a solid line in FIG. 3) and the terminal device 33. The AP 23 is currently connected to the terminal device 34. In actual application, there may be one or more terminal devices connected to each AP. In FIG. 1, for example, the terminal device 31 to the terminal device 34 are smartphones.

Some English acronyms in this specification such as acronyms in an existing communications system are used to describe the embodiments of the present invention, and may vary with evolvement of a network. For specific evolvement, refer to descriptions in corresponding standards.

Next, referring to FIG. 4, FIG. 4 is a possible structural diagram of a communications device according to an embodiment of the present invention. The communications device is, for example, the positioning apparatus, the AP, and the terminal device. As shown in FIG. 4, the communications device includes a processor 10, a transmitter 20, a receiver 30, a memory 40, and an antenna 50. The memory 40, the transmitter 20, the receiver 30, and the processor 10 may be connected by using a bus. Certainly, in actual application, the memory 40, the transmitter 20, the receiver 30, and the processor 10 may not be of a bus structure, but may be of another structure such as a star-shaped structure. This is not specifically limited in this application.

Optionally, the processor 10 may be specifically a general-purpose central processing unit or an application-specific integrated circuit (English: Application Specific Integrated Circuit, ASIC for short), may be one or more integrated circuits configured to control program execution, may be a hardware circuit developed by using a field programmable gate array (English: Field Programmable Gate Array, FPGA for short), or may be a baseband processor.

Optionally, the processor 10 may include at least one processing core.

Optionally, the memory 40 may include one or more of a read-only memory (English: Read Only Memory, ROM for short), a random access memory (English: Random Access Memory, RAM for short), and a magnetic disk memory. The memory 40 is configured to store data and/or an instruction that are/is required when the processor 10 runs. There may be one or more memories 40.

Optionally, the transmitter 20 and the receiver 30 may be physically independent of each other, or may be physically integrated together. The transmitter 20 may send data by using the antenna 50. The receiver 30 may receive data by using the antenna 50.

Optionally, the transmitter 20 and the receiver 30 of the terminal device, and the transmitter 20 and the receiver 30 of the AP support information transmission of a WiFi protocol.

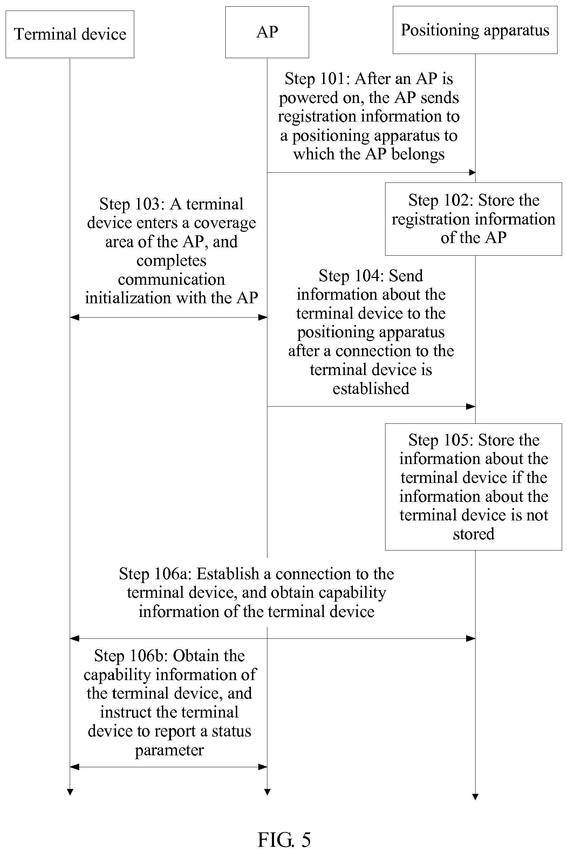

The following describes a positioning process in detail, to facilitate understanding of an implementation process of the positioning method in the embodiments of the present invention. The following first describes a preparation process of the AP, the terminal device, and the positioning apparatus before positioning. Referring to FIG. 5, FIG. 5 is a schematic diagram of information exchange between devices before positioning according to an embodiment of the present invention.

As shown in FIG. 5, in step 101, after an AP is powered on, the AP registers with a positioning apparatus to which the AP belongs. Specifically, the AP may send registration information to the positioning apparatus, and the registration information may include an identifier (ID) of the AP. Further, the registration information may further include an operating frequency band of the AP. For example, in the positioning system shown in FIG. 3, after the AP 22 is powered on, the AP 22 may send registration information to the positioning apparatus 11. The registration information includes an ID and an operating frequency band of the AP 22.

It should be noted that during AP deployment, position information of the AP is pre-stored in the positioning apparatus to which the AP belongs. Certainly, in actual application, the AP may report the position information to the positioning apparatus during registration or when a position of the AP changes. The position information may also be carried in the registration information. The position information may include a plane size of space in which the AP is located, three-dimensional relative coordinates of the AP on the plane, and the like.

After receiving a registration request sent by the AP, the positioning apparatus may perform step 102, that is, store the registration information of the AP. Specifically, the positioning apparatus may store a list of all APs managed by the positioning apparatus, and may store an ID of an AP as a keyword. After receiving the registration information, the positioning apparatus may store, by comparing IDs of APs, the registration information reported by the AP in an information table of the AP, and the position information of the AP may also be stored in the information table. For example, as shown in FIG. 3, a list of all APs managed by the positioning apparatus 11 may include the AP 21 to the AP 23. Then, the AP 22 is found by comparing IDs of the APs, and then the registration information of the AP 22 is stored in an information table corresponding to the AP 22.

After the AP is powered on, the AP is in a working state, and can scan or sense a terminal device that enters a coverage area of the AP. Similarly, the terminal device may also sense a surrounding AP. If a user selects to connect to the AP by using the terminal device, the AP and the terminal device may complete communication initialization. For example, if a connection is established by using a WiFi protocol, WiFi communication initialization is completed, so that the terminal device may access the Internet or a local area network by using the AP. The foregoing is content of step 103. For example, as shown in FIG. 3, the AP 22 may sense the terminal device 32 and the terminal device 33, and separately complete communication initialization with the terminal device 32 and the terminal device 33. In this case, both the terminal device 32 and the terminal device 33 may access the Internet by using the AP 22.

A sensing process and a communication initialization process may slightly vary according to different connection protocols. However, for each protocol, this part of content is content well known to a person skilled in the art. For the content, refer to the part of sensing and communication initialization in each protocol.

It should be noted that a sequence of performing step 102 and step 103 is not limited in the present invention, that is, step 102 may be first performed, or step 103 may be first performed, or step 102 and step 103 may be simultaneously performed.

After a connection to the terminal device is established, the AP then performs step 104, that is, sends information about the terminal device to the positioning apparatus. Optionally, the information about the terminal device may include but is not limited to an ID, a communication address, a sensing time, and the like of the terminal device. The communication address is, for example, an Internet Protocol (English: Internet Protocol, IP for short) address. The foregoing example is further used for description. As shown in FIG. 3, it is assumed that the AP 22 separately establishes a connection to the terminal device 32 and the terminal device 33, but a time at which the AP 22 establishes the connection to the terminal device 32 is earlier than a time at which the AP 22 establishes the connection to the terminal device 33. Therefore, after establishing the connection to the terminal device 32, the AP 22 immediately sends information about the terminal device 32 to the positioning apparatus 11, for example, an ID, an IP address, and a sensing time (for example, 15:46:30, October 25, 2016) of the terminal device 32. After a time period, the AP 22 further establishes the connection to the terminal device 33. Therefore, the AP 22 immediately sends information about the terminal device 33 to the positioning apparatus 11, for example, an ID, an IP address, and a sensing time (for example, 15:50:30, October 25, 2016) of the terminal device 32. Certainly, in actual application, the AP may periodically report, to the positioning apparatus, information about a terminal device newly connected to the AP within a time period, for example, the information is reported every 10 minutes, so that the AP 22 may send, in one message, the information about the terminal device 32 and the information about the terminal device 33.

After receiving the information about the terminal device sent by the AP, the positioning apparatus may perform step 105, that is, store the information about the terminal device if the information about the terminal device is not stored. A possible example is as follows: The positioning apparatus may locally store a correspondence information table between a terminal device and an AP. If a table querying operation returns "success", it indicates that the information about the terminal device is locally stored because the information has been sensed and reported by another AP managed by the positioning apparatus. If the table querying operation returns "failure", it indicates that the information about the terminal device is not locally stored, and the information about the terminal device is added to the local correspondence information table between a terminal device and an AP. For example, after receiving the information about the terminal device 32 sent by the AP 22, the positioning apparatus 11 may query, based on the ID of the terminal device 32, whether the information about the terminal device 32 is stored. If the information about the terminal device 32 is not found, the positioning apparatus 11 may store, in a terminal device information column corresponding to the AP 22 in the correspondence information table between a terminal device and an AP, the information about the terminal device 32 sent by the AP 22. If the terminal device 32 subsequently moves to a coverage area of the AP 21, and establishes a connection to the AP 21, the AP 21 also performs step 105. In this case, the positioning apparatus 11 queries again whether the information about the terminal device 32 is stored, and a query result is yes. The AP 22 has reported the information about the terminal device 32, and therefore the information about the terminal device 32 does not need to be stored again, and only an AP corresponding to the terminal device 32 needs to be changed to the AP 21.

Step 106a and step 106b are two different implementations, but purposes of the two implementations are to obtain capability information of the terminal device. The capability information may be specifically information such as an MEMS auxiliary function type of the terminal device, so that the AP or the positioning apparatus may learn of a status parameter that can be provided by the terminal device for a positioning service. For example, if the capability information indicates that the terminal device has an accelerometer, the terminal device may provide acceleration information.

In step 106a, if a new terminal device is added, the positioning apparatus may establish a connection to the terminal device, and obtain capability information of the terminal device. Specifically, the positioning apparatus may establish the connection to the terminal device by using a communication address of the terminal device sent by the AP. For example, the positioning apparatus may exchange information with the terminal device based on a Transmission Control Protocol (English: Transmission Control Protocol, TCP for short) or a User Datagram Protocol (English: User Datagram Protocol, TCP for short). For example, as shown in FIG. 3, the terminal device 33 is the newly-added terminal device. The positioning apparatus 11 initiates a connection request to the terminal device 33. The terminal device 33 responds to the request with a connection to the positioning apparatus 11, and may add capability information to the response. However, in actual application, the positioning apparatus 11 may send a request for obtaining capability information to the terminal device 33 after the connection is established.

In step 106b, the AP obtains the capability information of the terminal device from the terminal device, and instructs the terminal device to report the status parameter. A possible implementation is as follows: An existing connection protocol, such as a WiFi protocol, between an AP and a terminal device may be expanded, a new management frame is added, to obtain the capability information of the terminal device, and the terminal device may report the status parameter by using the newly-added management frame. Certainly, a message frame in an existing protocol may be reused, a new field may be added to a message frame in an existing protocol, or an idle field in an existing message frame may be used.

For example, a format of a request frame sent by the AP to the terminal device is shown in Table 1.

**Table 1**

| | | | |
|---|---|---|---|
| Category | Action | Trigger | Expand (Variable) |
| Category | Action | Trigger | Expand (Variable) |

For example, a format of a response frame sent by the terminal device to the AP is shown in Table 2.

**Table 2**

| | | | |
|---|---|---|---|
| Category | Action | Token | Expand (Variable) |
| Category | Action | Token | Expand (Variable) |

A category field is filled with a data frame type.

An action field indicates an action that is to be completed by a receive end and that is required by a data frame.

A trigger field indicates a trigger condition. When a condition is met, the action required by the data frame is executed.

A token field is an identifier, and may uniquely identify a session identity of a request and a response.

An expand field is a to-be-expanded and customized field with a variable length.

It should be noted that when the AP instructs the terminal device to report the status parameter, the AP may further instruct the terminal device to report specific content, a reporting period, and the like of the status parameter.

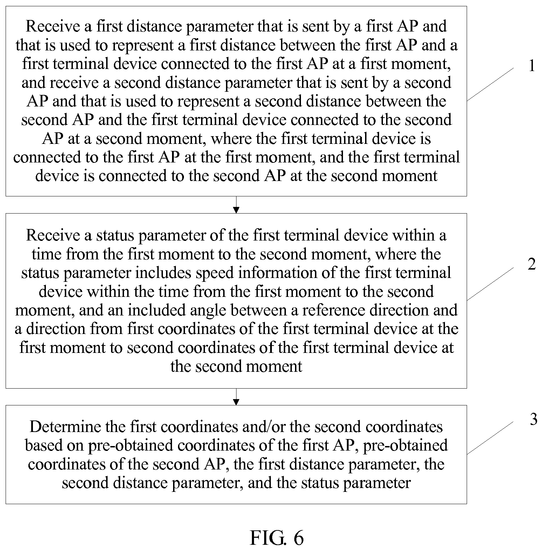

The foregoing describes a possible implementation of the preparation before positioning. In actual application, AP registration, reporting of information about a terminal device, and obtaining of capability information of a terminal device may alternatively be implemented in another manner. This is not specifically limited in the present invention. The following describes a specific positioning process. Referring to FIG. 6, FIG. 6 is a flowchart of a positioning method according to an embodiment of the present invention.

As shown in FIG. 6, the method includes the following steps.

Step 1: Receive a first distance parameter that is sent by a first AP and that is used to represent a first distance between the first AP and a first terminal device connected to the first AP at a first moment, and receive a second distance parameter that is sent by a second AP and that is used to represent a second distance between the second AP and the first terminal device connected to the second AP at a second moment, where the first terminal device is connected to the first AP at the first moment, and the first terminal device is connected to the second AP at the second moment.

Step 2: Receive a status parameter of the first terminal device within a time from the first moment to the second moment, where the status parameter includes speed information of the first terminal device within the time from the first moment to the second moment, and an included angle between a reference direction and a direction from first coordinates of the first terminal device at the first moment to second coordinates of the first terminal device at the second moment.

Step 3: Determine the first coordinates and/or the second coordinates based on pre-obtained coordinates of the first AP, pre-obtained coordinates of the second AP, the first distance parameter, the second distance parameter, and the status parameter.

In a positioning process, the first terminal device may be connected to only one AP, or a moving range of the first terminal device crosses coverage areas of two APs, and the first terminal device is sequentially connected to the two APs. Therefore, there may be only one AP participating in the positioning process, or there may be two APs participating in the positioning process. Therefore, the first AP and the second AP in this embodiment of the present invention may be the same or may be different.

A positioning process in which only one AP participates and a positioning process in which the two APs participate are slightly different. The following describes the two positioning processes in detail.

Optionally, the status parameter of the first terminal device may be directly sent by the first terminal device to a positioning apparatus, or may be sent to a positioning apparatus by an AP connected to the first terminal device. A specific implementation process is described in detail in the following.

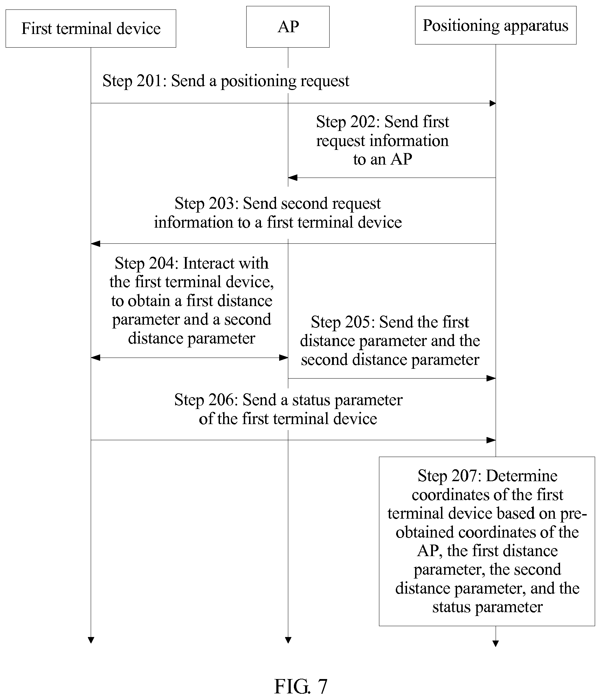

An example in which one AP participates in positioning and the first terminal device reports a status parameter to the positioning apparatus is used for description in the following. As shown in FIG. 7, the positioning method includes the following steps.

Step 201: The first terminal device sends a positioning request to the positioning apparatus. Specifically, when the first terminal device held or worn by a user enters a coverage area of the AP, and establishes a connection to the AP, the user may operate the first terminal device to send the positioning request to the positioning apparatus. The first terminal device is one of a plurality of terminal devices connected to the AP, that is, the AP may further connect to a second terminal device. The plurality of terminal devices connected to the AP may simultaneously send or may not simultaneously send positioning requests to the positioning apparatus. In an example shown in FIG. 3, the terminal device 32 may send a positioning request to the AP 22. The terminal device 33 may send a positioning request to the AP 22 before, when, or after the terminal device 32 sends the positioning request. In this embodiment, for example, the first terminal device is the terminal device 32, the AP is the AP 22, and both the first AP and the second AP described in step 1 to step 3 are the AP 22. For example, the positioning apparatus is the positioning apparatus 11.

It should be noted that step 201 is an optional step. In actual application, the positioning apparatus may start a positioning procedure based on the positioning request sent by the first terminal device, that is, perform step 202 and a subsequent step. Certainly, the positioning apparatus may also automatically initiate the positioning procedure, for example, the positioning apparatus may periodically initiate the positioning procedure for all terminal devices connected to the AP managed by the positioning apparatus.

When the positioning apparatus receives the positioning request sent by the first terminal device, the positioning apparatus may perform step 202 and step 203, that is, the positioning apparatus sends first request information to the AP, and sends second request information to the first terminal device. A possible implementation of step 202 is as follows: The positioning apparatus may obtain an ID of the AP connected to the first terminal device by querying, based on an ID of the first terminal device, the correspondence information table between a terminal device and an AP described in step 105, and then send the first request information to the AP. In this embodiment, the first request information is used to request a first distance parameter and a second distance parameter from the AP. The first request information may include the ID of the first terminal device or other information that may be used to identify the first terminal device. Optionally, the first request information may further include a period of obtaining a distance parameter, for example, the distance parameter is determined every 10 ms.

A possible implementation of step 203 is as follows: The positioning apparatus may query a communication address of the first terminal device stored in step 105, and send the second request information to the first terminal device by using the communication address. The second request information is used to request the status parameter of the first terminal device. Further, the second request information may carry content (such as a time, an acceleration, a rotation angle, and a moving direction) and a reporting period of the status parameter that the first terminal device is requested to report. For example, the period is 10 ms, that is, the status parameter is reported every 10 ms.

Optionally, the positioning apparatus may support aperiodic distance parameter measurement or aperiodic status parameter reporting. When the positioning apparatus needs to obtain the distance parameter and the status parameter, the positioning apparatus may request the AP to obtain and feed back the distance parameter, and request the first terminal device to report the status parameter. The positioning apparatus may repeatedly perform step 202 and step 203, to obtain a plurality of groups of distance parameters and corresponding status parameters.

For example, after receiving the positioning request of the terminal device 32, the positioning apparatus 11 may send the first request information to the AP 22, and the first request information includes the ID of the terminal device 32 and a period of measuring the distance parameter. The positioning apparatus 11 may send the second request information to the terminal device 32, and the second request information may include content and a reporting period of the status parameter that the terminal device 32 is requested to report. For example, the content is speed information and a moving direction. For example, the period is 10 ms.

Optionally, the content of the status parameter that the positioning apparatus requests the first terminal device to report may be determined based on the capability information of the first terminal device obtained in step 106a. If the first terminal device does not have a capability of reporting a status parameter, the first terminal device cannot provide the status parameter. Therefore, the positioning apparatus may request the first terminal device based on the capability information obtained in step 106a.

It should be noted that a sequence of performing step 202 and step 203 is not limited, that is, step 202 may be first performed, or step 203 may be first performed, or step 202 and step 203 may be simultaneously performed.

After receiving the first request information sent by the positioning apparatus, the AP may perform step 204, that is, the AP interacts with the first terminal device, to obtain the first distance parameter and the second distance parameter. The AP may determine the first terminal device based on an ID of a terminal device included in the first request information.

A possible implementation of step 204 is as follows: The AP sends a fine timing measurement (English: Fine Timing Measurement, FTM for short) frame to the first terminal device at the first moment, the AP receives a test response sent by the first terminal device based on the FTM frame, and the AP determines the first distance parameter based on the first moment and a moment at which the test response is received/sent. The second distance parameter corresponding to the second moment may be obtained according to the same method.

An FTM mechanism is used to support fine timing measurement, and a measurement principle is that the AP obtains a signal transfer time from the AP to the first terminal device by using a moment at which the FRM frame is sent and a moment at which the text response of the first terminal device is received, and a distance from the AP to the first terminal device may be calculated by multiplying the signal transfer time by a signal transfer speed. Generally, the signal transfer speed is related to a signal transfer medium and a protocol. During network deployment, the signal transfer medium and the protocol are deployed in advance. Therefore, the signal transfer speed is a known parameter.

A time measurement granularity unit of the FTM mechanism is 0.1 ns, which means that a WiFi technology based on this mechanism may perform precise time measurement, so that a distance measurement granularity may reach 3 centimeters. Therefore, based on the FTM mechanism, the first distance and the second distance may be more precise, and therefore coordinates of the first terminal device that are determined based on the first distance parameter and the second distance parameter may also be more precise, thereby improving positioning precision.

For example, when receiving the first request information sent by the positioning apparatus 11, the AP 22 may send the FTM frame to the terminal device 32. When receiving the FTM frame sent by the AP 22, the terminal device 32 may reply with a test response frame. The AP 22 may calculate, based on the moment at which the FTM is sent, the moment at which the terminal device 32 sends the test response, and a transfer speed of the FTM frame, a distance between the AP 22 and the terminal device 32 within a time from the moment at which the FTM is sent to the moment at which the terminal device 32 sends the test response. The calculated distance may be used as a distance corresponding to the moment at which the FTM is sent.

It should be noted that in actual application, a distance parameter obtained by the AP may be a distance calculated by the AP, or may be a signal transfer time obtained by the AP, or may be the moment at which the FTM is sent and the moment at which the terminal device 32 sends the test response. If the distance parameter is the distance calculated by the AP, the first distance parameter and the second distance parameter are respectively the first distance and the second distance. If the distance parameter is the signal transfer time, or the moment at which the FTM is sent and the moment at which the terminal device 32 sends the test response, the positioning apparatus calculates a distance based on the distance parameter.

Optionally, the AP may alternatively measure a distance between the AP and the first terminal device in another manner. For example, the AP obtains an RSSI from the first terminal device, and the AP may determine the distance between the AP and the first terminal device based on the RSSI and distribution data of signal strength. In this case, the distance parameter reported by the AP may be a distance calculated based on the RSSI, or may be the obtained RSSI. If the AP is the obtained RSSI, the positioning apparatus determines the distance between the AP and the first terminal device based on the RSSI and the distribution data of the signal strength.

Certainly, in actual application, the AP may alternatively obtain the distance parameter in another manner. This is not specifically limited in the present invention.

After obtaining the first distance parameter and the second distance parameter, the AP may perform step 205, that is, send the first distance parameter and the second distance parameter to the positioning apparatus.

Optionally, after obtaining the first distance parameter, the AP may report the first distance parameter, and then obtain the second distance parameter, and report the second distance parameter.

Optionally, after obtaining the first distance parameter and the second distance parameter, the AP may report the first distance parameter and the second distance parameter at a time.

For example, after calculating the first distance, the AP 22 sends the first distance to the positioning apparatus 11. Then, in a next test period, an FTM test is performed to calculate the second distance, and then the second distance is sent to the positioning apparatus 11.

On a first terminal device side, after receiving the second request information, the first terminal device may enable an MEMS of the first terminal device, to obtain a related status parameter, for example, a moving moment and speed information, which may further include a moving direction. Certainly, the MEMS of the first terminal device may be always enabled, to record the status parameter of the first terminal device in real time.

In step 206, the first terminal device may alternatively periodically report the status parameter, for example, report the status parameter of the first terminal device every 10 ms. The first terminal device may alternatively report the status parameter of the first terminal device when the status parameter of the first terminal device changes.

For example, the terminal device 32 may send the status parameter of the terminal device 32 to the positioning apparatus 11 every 10 ms.

It should be noted that step 202 and step 203 are optional steps. In actual application, the AP may actively obtain and report the first distance parameter and the second distance parameter, that is, actively perform step 204 and step 205. The first terminal device may also actively report the status parameter of the first terminal device, that is, actively perform step 206.

When receiving the first distance parameter, the second distance parameter, and the status parameter, the positioning apparatus may perform step 207: The positioning apparatus determines coordinates of the first terminal device based on pre-obtained coordinates of the AP, the first distance parameter, the second distance parameter, and the status parameter.

As described above, during AP deployment, the coordinates of the AP have been determined, and may be stored in the positioning apparatus.

Optionally, a specific algorithm may be pre-stored in the positioning apparatus, and is used to calculate the coordinates of the first terminal device based on the obtained distance parameter and the obtained status parameter.

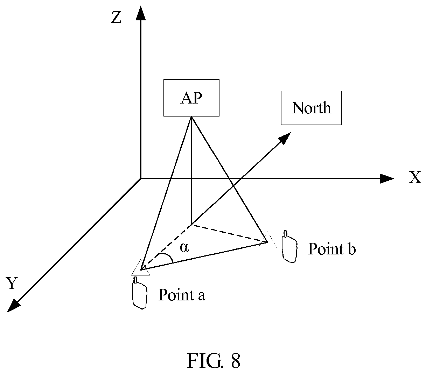

The following describes a possible implementation of step 207. Referring to FIG. 8, the positioning apparatus may obtain two distance parameters within a time interval {t1, t2} from the obtained plurality of groups of distance parameters, for example, a first distance parameter at a moment t1 and a second distance parameter at a moment t2. The first terminal device is located at a point a at the moment t1, and is located at a point b at the moment t2. A moving distance of the first terminal device within the time interval {t1, t2} is denoted as Dab, and may be calculated by using speed information reported by the first terminal device and the time interval. An included angle α between a northbound direction and a direction from the point a to the point b may also be reported by the first terminal device, for example, an electronic compass or a compass of the first terminal device may obtain a moving direction. At the moment t1, a first distance between the AP and the first terminal device may be determined by using the first distance parameter, and the first distance is denoted as Dap. At the moment t2, a second distance between the AP and the first terminal device may be determined by using the second distance parameter, and the second distance is denoted as Dbp.

It is assumed that three-dimensional coordinates of the AP are (Xp, Yp, Zp), and it may be learned that projection coordinates of the AP on an XY plane are (Xp, Yp). The projection point is used as a center of a circle, a distance from the projection point to each of the points a and b may be learned of, and then coordinates of each of the points a and b are easily deduced by using the direction angle α and a specific geometric operation. This part of content is content well known to a person skilled in the art, and therefore details are not described herein.

It may be learned from the foregoing description that according to the method, positioning precision is improved, and in addition, because positioning of a terminal device may be implemented by using only one AP, costs of positioning service deployment are reduced, and deployment difficulty is reduced.

Optionally, a complex situation such as a rotation direction and an acceleration change of the first terminal device may be further considered in a positioning process, and the foregoing process is a simple example. When a more complex situation is considered, only an algorithm is more complex than the foregoing algorithm. However, the algorithm is content well known to a person skilled in the art, and therefore any solution in which the AP and the terminal device provide together a parameter required in positioning falls within the protection scope of the present invention.

Optionally, after the first coordinates and the second coordinates are determined, any one of the two coordinates may be used as a current position of the first terminal device, or a position range that is determined based on the first coordinates and the second coordinates may be used as a current position of the first terminal device.

Optionally, after determining the current position of the first terminal device, the positioning apparatus may send the position to the first terminal device. Therefore, the user can learn of a current position of the user.

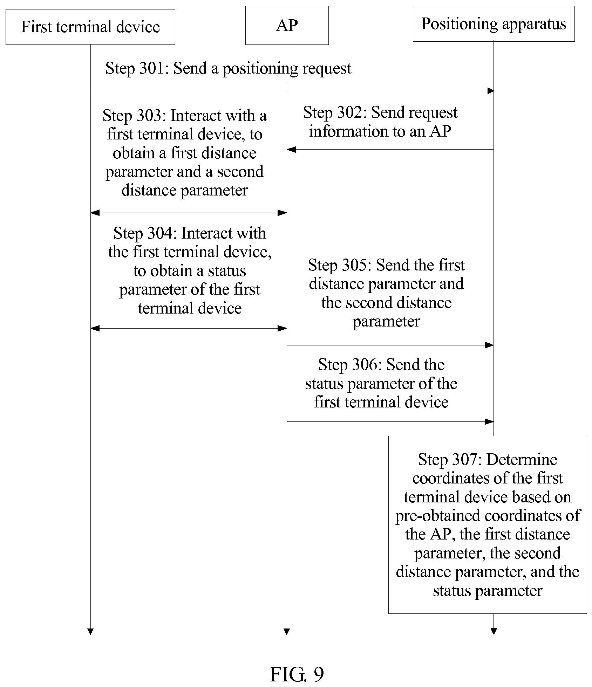

Referring to FIG. 9, an example in which one AP participates in positioning and the AP reports a status parameter of the first terminal device is used in the following in this embodiment. The positioning method includes the following steps.

Step 301: The first terminal device sends a positioning request to the positioning apparatus. Specifically, for a specific implementation process of step 301, refer to the foregoing description of step 201. Details are not described herein again.

The positioning apparatus may perform step 302 based on the positioning request or actively perform step 302, that is, the positioning apparatus sends request information to the AP. A difference between step 302 and step 202 lies in that the request information in step 302 is used to request not only a first distance parameter and a second distance parameter, but also the status parameter of the first terminal device. Other content in step 302 is the same as that in step 202, and details are not described herein again.

The AP performs step 303 when receiving the request information sent by the positioning apparatus, or the AP actively performs step 303, that is, the AP interacts with the first terminal device, to obtain first distance information and second distance information. Content of step 303 is the same as content of step 204, and details are not described herein again.

In step 304, the AP interacts with the first terminal device, to obtain the status parameter of the first terminal device. A possible implementation of step 304 is as follows: The AP may send, by using the frame format shown in the foregoing Table 1, a request for obtaining a status parameter to the first terminal device, and the request may include content and a reporting period of a status parameter that is requested and to be reported. The first terminal device may report, according to the reporting period, the status parameter of the first terminal device by using the frame format shown in the foregoing Table 2.

Optionally, the AP may determine, based on the capability information of the first terminal device obtained in step 106b, a type of a status parameter that the first terminal device is requested to report, so as to ensure that the first terminal device can provide the requested status parameter.

After obtaining the first distance parameter and the second distance parameter, the AP may perform step 305: The AP sends the first distance parameter and the second distance parameter to the positioning apparatus. Step 305 is the same as step 205, and details are not described herein again.

After obtaining the status parameter of the first terminal device, the AP may perform step 306: The AP sends the status parameter of the first terminal device to the positioning apparatus.

It should be noted that a sequence of performing step 305 and step 306 is not limited, that is, step 305 may be first performed, or step 306 may be first performed, or step 305 and step 306 may be simultaneously performed.

Next, the positioning apparatus may perform step 307, that is, the positioning apparatus determines coordinates of the first terminal device based on pre-obtained coordinates of the AP, the first distance parameter, the second distance parameter, and the status parameter. For a specific implementation process of step 307, refer to the foregoing description of step 207. Details are not described herein again.

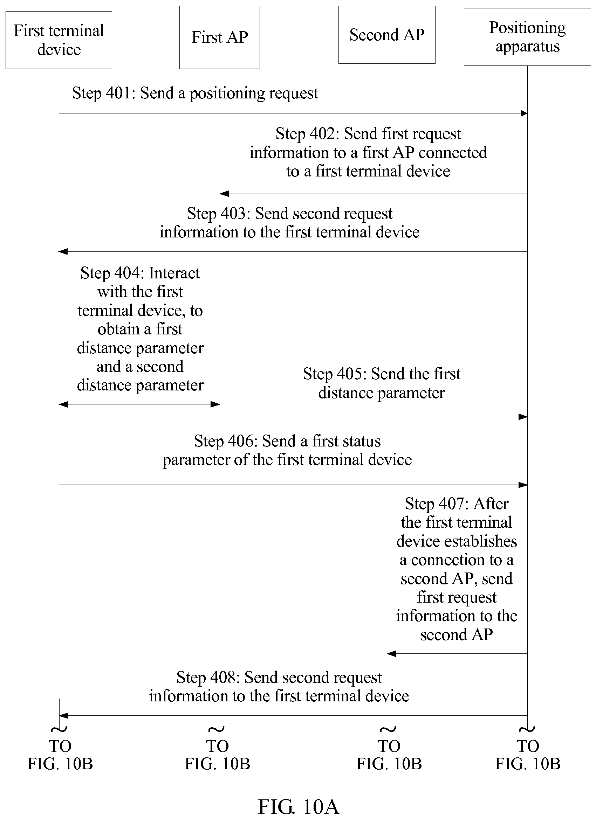

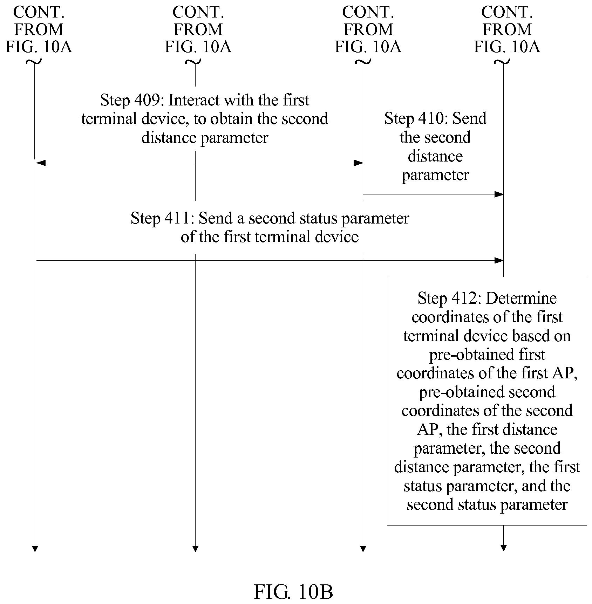

Referring to FIG. 10A and FIG. 10B, an example in which two APs participate in positioning and the first terminal device reports a status parameter is used for description in the following in this embodiment. The positioning method includes the following steps.

Step 401: The first terminal device sends a positioning request to the positioning apparatus. Specifically, for a specific implementation process of step 401, refer to the foregoing description of step 201. Details are not described herein again.

After receiving the positioning request, the positioning apparatus may perform step 402 and step 403, or may actively perform step 402 and step 403, that is, the positioning apparatus sends first request information to a first AP connected to the first terminal device. The positioning apparatus sends second request information to the first terminal device. For specific implementation processes of step 402 and step 403, refer to the foregoing descriptions of step 202 and step 203.

Step 404: The first AP interacts with the first terminal device, to obtain a first distance parameter and a second distance parameter. A specific implementation process of step 404 is similar to that of step 204. A different is that the first terminal device is disconnected from the first AP before the first AP obtains the second distance parameter and after only the first distance parameter is obtained. Therefore, the second distance parameter cannot be obtained. For example, the first AP performs FTM measurement every 10 ms, and the first AP is disconnected from the first terminal device after the first distance parameter is obtained in first measurement. Therefore, next FTM measurement cannot be performed. In this case, the AP performs step 405, that is, the first AP sends the first distance parameter to the positioning apparatus.

The first terminal device may perform step 406 based on step 403, or may actively perform step 406: The first terminal device sends a first status parameter of the first terminal device to the positioning apparatus. Specifically, an implementation process of step 406 is similar to that of step 206. A difference is that the currently-sent first status parameter is corresponding to a first moment, that is, the first status parameter is a status parameter obtained when the first terminal device is connected to the first AP.

After the first terminal device is disconnected from the first AP, the first terminal device moves to a coverage area of a second AP. The second AP performs step 103 and step 104, and in this case, the first terminal device establishes a connection to the second AP. In this case, when the positioning apparatus performs step 105, because the first AP has reported information about the first terminal device, in step 105, the information about the first terminal device does not need to be stored again, and the first terminal device is associated with the second AP. For example, when the terminal device 32 is connected to the AP 22, namely, the first AP, the AP 22 performs only one FTM measurement. Therefore, the AP 22 obtains only the first distance parameter. The terminal device is disconnected from the AP 22 before a next measurement period, and the terminal device moves to the coverage area of the AP 21, namely, the second AP. The AP 21 performs processing based on step 103 to step 105. The positioning apparatus 11 learns that the terminal device 32 has established a connection to the AP 21.

In a case of the foregoing description, the positioning apparatus performs step 407 and step 408. Step 407: After the first terminal device establishes a connection to the second AP, the positioning apparatus sends first request information to the second AP. The first request information is used to obtain at least one group of distance parameters, and a distance parameter closest to the first distance parameter in terms of time may be used as the second distance parameter.

Step 408: The positioning apparatus sends second request information to the first terminal device. Step 408 is the same as step 403. Step 408 is an optional step. When the first terminal device is disconnected from the first AP, the first terminal device may continue to report the status parameter of the first terminal device, and therefore the positioning apparatus may not send the second request information again. When the first terminal device is disconnected from the first AP and establishes the connection to the second AP, if the status parameter of the first terminal device reported by the first terminal device based on the request information in step 403 expires, step 408 may be performed, so that a status parameter obtained in this way is more accurate, so as to improve positioning precision.

After receiving the first request information sent by the positioning apparatus, the second AP may perform step 409, or may actively perform step 408: The second AP interacts with the first terminal device, to obtain the second distance parameter. A specific implementation process of step 409 is the same as that of step 204, and details are not described herein again.

After obtaining the second distance parameter, the second AP performs step 410, that is, the second AP sends the second distance parameter to the positioning apparatus.

Similar to step 406, after receiving a second request, the first terminal device performs step 411, that is, the first terminal device sends a second status parameter of the first terminal device to the positioning apparatus.

Step 412: The positioning apparatus determines coordinates of the first terminal device based on pre-obtained first coordinates of the first AP, pre-obtained second coordinates of the second AP, the first distance parameter, the second distance parameter, the first status parameter, and the second status parameter. A specific implementation process of step 401 is similar to that of step 207, and details are not described herein again.

An embodiment in which two APs participate in positioning and an AP reports a status parameter of a terminal device can be easily obtained based on the two embodiments described in FIG. 9 and FIG. 10A and FIG. 10B. Therefore, for brevity of the specification, details are not described herein.

It may be learned from the foregoing description that in the solutions of the embodiments of the present invention, the terminal device and the AP connected to the terminal device provide together the parameter required in positioning. Therefore, compared with the positioning method in the prior art, the positioning methods in the embodiments of the present invention have high positioning precision and low costs.

Based on a same invention concept, an embodiment of the present invention further provides a communications device (shown in FIG. 4). The communications device is configured to implement any one of the foregoing methods.

When the communications device is a positioning apparatus, a receiver 30 is configured to: receive a first distance parameter that is sent by a first access point AP and that is used to represent a first distance between the first AP and a first terminal device connected to the first AP at a first moment, and receive a second distance parameter that is sent by a second AP and that is used to represent a second distance between the second AP and the first terminal device connected to the second AP at a second moment, where the first terminal device is connected to the first AP at the first moment, the first terminal device is connected to the second AP at the second moment, and the first AP and the second AP are a same AP or different APs; and receive a status parameter of the first terminal device within a time from the first moment to the second moment, where the status parameter includes speed information of the first terminal device within the time from the first moment to the second moment, and an included angle between a reference direction and a direction from first coordinates of the first terminal device at the first moment to second coordinates of the first terminal device at the second moment. A processor 10 is configured to determine the first coordinates and/or the second coordinates based on pre-obtained coordinates of the first AP, pre-obtained coordinates of the second AP, the first distance parameter, the second distance parameter, and the status parameter.

Optionally, a transmitter 20 is configured to: before the receiver 30 receives the first distance parameter and the second distance parameter, send request information to the first AP and the second AP, where the request information is used to request the first distance parameter, the second distance parameter, and the status parameter from the APs.

Correspondingly, the receiver 30 is configured to: receive a first status parameter that is sent by the first AP and that is of the first terminal device at the first moment, and receive a second status parameter that is sent by the second AP and that is of the first terminal device at the second moment, where the status parameter includes the first status parameter and the second status parameter.

Optionally, the transmitter 20 is configured to: before the receiver 30 receives the first distance parameter and the second distance parameter, send first request information to the first AP and the second AP, where the first request information is used to request the first distance parameter and the second distance parameter from the first AP and the second AP; and send second request information to the first terminal device, where the second request information is used to request the status parameter from the first terminal device.

Correspondingly, the receiver 30 is configured to receive the status parameter that is sent by the first terminal device and that is of the first terminal device within the time from the first moment to the second moment.

Optionally, the receiver 30 is further configured to: before receiving the first distance parameter and the second distance parameter, receive a positioning request sent by the first terminal device.

Optionally, the receiver 30 is further configured to receive connection information of the first terminal device sent by the first AP. The transmitter 20 is configured to initiate a connection request to the first terminal device based on the connection information. The receiver 30 is further configured to: after the positioning apparatus establishes a connection to the first terminal device, receive capability information sent by the first terminal device, where the capability information is used to represent whether the first terminal device can provide the status parameter.

Optionally, the first distance parameter and the second distance parameter are distance parameters that are obtained based on a fine timing measurement FTM mechanism.

Optionally, the positioning apparatus is an access point AP, an access controller AC, or an optical line terminal OLT.

When the communications device is an AP, a processor 10 is configured to obtain a first distance parameter that is used to represent a first distance between a first terminal device connected to the AP and the AP at a first moment, where the first distance parameter is used to determine first coordinates of the first terminal device at the first moment. A transmitter 20 is configured to send the first distance parameter to a positioning apparatus that manages the AP.

Optionally, the processor 10 is further configured to obtain a second distance parameter that is used to represent a second distance between the first terminal device connected to the AP and the AP at a second moment, where the second distance parameter is used to determine second coordinates of the first terminal device at the second moment. The transmitter 20 is further configured to send the second distance parameter to the positioning apparatus that manages the AP.

Optionally, a receiver 30 is configured to receive a first status parameter that is sent by the first terminal device and that is of the first terminal device at the first moment, where the first status parameter is used to determine first coordinates of the first terminal device at the first moment.

The transmitter 20 is further configured to send the first status parameter to the positioning apparatus.

Optionally, a receiver 30 is configured to receive a first status parameter of the first terminal device at the first moment and a second status parameter of the first terminal device at the second moment that are sent by the first terminal device, where the first status parameter and the second status parameter are used to determine first coordinates of the first terminal device at the first moment and second coordinates of the first terminal device at the second moment.

The transmitter 20 is further configured to send the first status parameter and the second status parameter to the positioning apparatus.

Optionally, the processor 10 is configured to: send, by using the transmitter 20, a fine timing measurement FTM frame to the first terminal device at the first moment; receive, by using the receiver 30, a test response that is sent by the first terminal device based on the FTM frame; and determine the first distance parameter based on the first moment and a moment at which the test response is received.

Optionally, the receiver 30 is further configured to: before the AP receives the first status parameter, receive capability information of the first terminal device sent by the first terminal device, where the capability information is used to represent whether the first terminal device can provide the first status parameter.

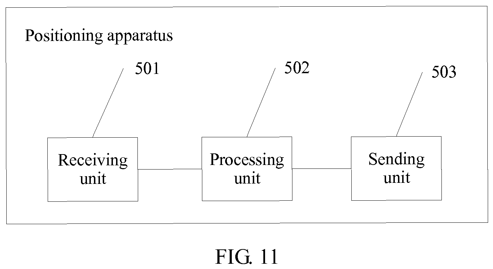

Based on a same invention concept, an embodiment of the present invention further provides a positioning apparatus. The positioning apparatus includes function modules configured to perform the steps in the foregoing method. For example, as shown in FIG. 11, the positioning apparatus includes a receiving unit 501, a processor unit 502, and a sending unit 503. In actual application, other units/modules may be further configured according to actual needs.

Specifically, when the positioning apparatus is configured to implement the functions of the foregoing positioning apparatus, the receiving unit 501 is configured to: receive a first distance parameter that is sent by a first access point AP and that is used to represent a first distance between the first AP and a first terminal device connected to the first AP at a first moment, and receive a second distance parameter that is sent by a second AP and that is used to represent a second distance between the second AP and the first terminal device connected to the second AP at a second moment, where the first terminal device is connected to the first AP at the first moment, the first terminal device is connected to the second AP at the second moment, and the first AP and the second AP are a same AP or different APs; and receive a status parameter of the first terminal device within a time from the first moment to the second moment, where the status parameter includes speed information of the first terminal device within the time from the first moment to the second moment, and an included angle between a reference direction and a direction from first coordinates of the first terminal device at the first moment to second coordinates of the first terminal device at the second moment. The processing unit 502 is configured to determine the first coordinates and/or the second coordinates based on pre-obtained coordinates of the first AP, pre-obtained coordinates of the second AP, the first distance parameter, the second distance parameter, and the status parameter.

Optionally, the sending unit 503 is configured to: before the receiving unit 501 receives the first distance parameter and the second distance parameter, send request information to the first AP and the second AP, where the request information is used to request the first distance parameter, the second distance parameter, and the status parameter from the APs.

Correspondingly, the receiving unit 501 is configured to: receive a first status parameter that is sent by the first AP and that is of the first terminal device at the first moment, and receive a second status parameter that is sent by the second AP and that is of the first terminal device at the second moment, where the status parameter includes the first status parameter and the second status parameter.

Optionally, the sending unit 503 is configured to: before the receiving unit 501 receives the first distance parameter and the second distance parameter, send first request information to the first AP and the second AP, where the first request information is used to request the first distance parameter and the second distance parameter from the first AP and the second AP; and send second request information to the first terminal device, where the second request information is used to request the status parameter from the first terminal device.

Correspondingly, the receiving unit 501 is configured to receive the status parameter that is sent by the first terminal device and that is of the first terminal device within the time from the first moment to the second moment.

Optionally, the receiving unit 501 is further configured to: before receiving the first distance parameter and the second distance parameter, receive a positioning request sent by the first terminal device.

Optionally, the receiving unit 501 is further configured to receive connection information of the first terminal device sent by the first AP. The sending unit 503 is configured to initiate a connection request to the first terminal device based on the connection information. The receiving unit 501 is further configured to: after the positioning apparatus establishes a connection to the first terminal device, receive capability information sent by the first terminal device, where the capability information is used to represent whether the first terminal device can provide the status parameter.

Optionally, the first distance parameter and the second distance parameter are distance parameters that are obtained based on a fine timing measurement FTM mechanism.

Optionally, the positioning apparatus is an access point AP, an access controller AC, or an optical line terminal OLT.

Specifically, when the apparatus is configured to implement functions of an AP, the processing unit 502 is configured to obtain a first distance parameter that is used to represent a first distance between a first terminal device connected to the AP and the AP at a first moment, where the first distance parameter is used to determine first coordinates of the first terminal device at the first moment. The sending unit 503 is configured to send the first distance parameter to a positioning apparatus that manages the AP.

Optionally, the processing unit 502 is further configured to obtain a second distance parameter that is used to represent a second distance between the first terminal device connected to the AP and the AP at a second moment, where the second distance parameter is used to determine second coordinates of the first terminal device at the second moment.

The sending unit 503 is further configured to send the second distance parameter to the positioning apparatus that manages the AP.

Optionally, the receiving unit 501 is configured to receive a first status parameter that is sent by the first terminal device and that is of the first terminal device at the first moment, where the first status parameter is used to determine first coordinates of the first terminal device at the first moment. The sending unit 503 is further configured to send the first status parameter to the positioning apparatus.

Optionally, the receiving unit 501 is configured to receive a first status parameter of the first terminal device at the first moment and a second status parameter of the first terminal device at the second moment that are sent by the first terminal device, where the first status parameter and the second status parameter are used to determine first coordinates of the first terminal device at the first moment and second coordinates of the first terminal device at the second moment. The sending unit 503 is further configured to send the first status parameter and the second status parameter to the positioning apparatus.

Optionally, the processing unit 502 is configured to: send, by using the sending unit 503, a fine timing measurement FTM frame to the first terminal device at the first moment; receive, by using the receiving unit 501, a test response that is sent by the first terminal device based on the FTM frame; and determine the first distance parameter based on the first moment and a moment at which the test response is received.

Optionally, the receiving unit 501 is further configured to: before the AP receives the first status parameter, receive capability information of the first terminal device sent by the first terminal device, where the capability information is used to represent whether the first terminal device can provide the first status parameter.

Various types of variations and specific instances in the positioning method in the foregoing embodiment are also applicable to the positioning apparatus in this embodiment and the communications device in FIG. 4. According to the foregoing detailed descriptions of the positioning method, a person skilled in the art may clearly know implementation methods of the positioning apparatus in this embodiment and the communications device in FIG. 4. Therefore, for brevity of the specification, details are not described herein.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A positioning method, comprising:
receiving a first distance parameter that is sent by a first access point AP and that is used to represent a first distance between the first AP and a first terminal device connected to the first AP at a first moment, and receiving a second distance parameter that is sent by a second AP and that is used to represent a second distance between the second AP and the first terminal device connected to the second AP at a second moment, wherein the first terminal device is connected to the first AP at the first moment, the first terminal device is connected to the second AP at the second moment, and the first AP and the second AP are a same AP or different APs;
receiving a status parameter of the first terminal device within a time from the first moment to the second moment, wherein the status parameter comprises speed information of the first terminal device within the time from the first moment to the second moment, and an included angle between a reference direction and a direction from first coordinates of the first terminal device at the first moment to second coordinates of the first terminal device at the second moment; and
determining the first coordinates and/or the second coordinates based on pre-obtained coordinates of the first AP, pre-obtained coordinates of the second AP, the first distance parameter, the second distance parameter, and the status parameter.

2. The method according to claim 1, wherein before receiving the first distance parameter and the second distance parameter, the method further comprises:
sending request information to the first AP and the second AP, wherein the request information is used to request the first distance parameter, the second distance parameter, and the status parameter from the APs; and
correspondingly, the receiving a status parameter of the first terminal device within a time from the first moment to the second moment comprises:
receiving a first status parameter that is sent by the first AP and that is of the first terminal device at the first moment, and receiving a second status parameter that is sent by the second AP and that is of the first terminal device at the second moment, wherein the status parameter comprises the first status parameter and the second status parameter.

3. The method according to claim 1, wherein before receiving the first distance parameter and the second distance parameter, the method further comprises:
sending first request information to the first AP and the second AP, wherein the first request information is used to request the first distance parameter and the second distance parameter from the first AP and the second AP; and
sending second request information to the first terminal device, wherein the second request information is used to request the status parameter from the first terminal device; and
correspondingly, the receiving a status parameter of the first terminal device within a time from the first moment to the second moment comprises:
receiving the status parameter that is sent by the first terminal device and that is of the first terminal device within the time from the first moment to the second moment.

4. The method according to any one of claims 1 to 3, wherein before receiving the first distance parameter and the second distance parameter, the method further comprises:
receiving a positioning request sent by the first terminal device.

5. The method according to claim 3, wherein before receiving the first distance parameter and the second distance parameter, the method further comprises:
receiving connection information of the first terminal device sent by the first AP;
initiating a connection request to the first terminal device based on the connection information; and
after a connection to the first terminal device is established, receiving capability information sent by the first terminal device, wherein the capability information is used to represent whether the first terminal device can provide the status parameter.

6. The method according to any one of claims 1 to 5, wherein the first distance parameter and the second distance parameter are distance parameters that are obtained based on a fine timing measurement FTM mechanism.

7. A positioning method, comprising:
obtaining, by an access point AP, a first distance parameter that is used to represent a first distance between a first terminal device connected to the AP and the AP at a first moment, wherein the first distance parameter is used to determine first coordinates of the first terminal device at the first moment; and
sending, by the AP, the first distance parameter to a positioning apparatus that manages the AP.

8. The method according to claim 7, wherein the method further comprises:
obtaining, by the AP, a second distance parameter that is used to represent a second distance between the first terminal device connected to the AP and the AP at a second moment, wherein the second distance parameter is used to determine second coordinates of the first terminal device at the second moment; and
sending, by the AP, the second distance parameter to the positioning apparatus.

9. The method according to claim 7, wherein the method further comprises:
receiving, by the AP, a first status parameter that is sent by the first terminal device and that is of the first terminal device at the first moment, wherein the first status parameter is used to determine first coordinates of the first terminal device at the first moment; and
sending, by the AP, the first status parameter to the positioning apparatus.

10. The method according to claim 8, wherein the method further comprises:
receiving, by the AP, a first status parameter of the first terminal device at the first moment and a second status parameter of the first terminal device at the second moment that are sent by the first terminal device, wherein the first status parameter and the second status parameter are used to determine first coordinates of the first terminal device at the first moment and second coordinates of the first terminal device at the second moment; and
sending, by the AP, the first status parameter and the second status parameter to the positioning apparatus.

11. The method according to any one of claims 7 to 10, wherein the obtaining, by an AP, a first distance parameter comprises:
sending, by the AP, a fine timing measurement FTM frame to the first terminal device at the first moment;
receiving, by the AP, a test response that is sent by the first terminal device based on the FTM frame; and
determining, by the AP, the first distance parameter based on the first moment and a moment at which the test response is received.

12. The method according to claim 9 or 10, wherein before the AP receives the first status parameter, the method further comprises:
receiving, by the AP, capability information of the first terminal device sent by the first terminal device, wherein the capability information is used to represent whether the first terminal device can provide the first status parameter.

13. A positioning apparatus, comprising:
a receiver, configured to: receive a first distance parameter that is sent by a first access point AP and that is used to represent a first distance between the first AP and a first terminal device connected to the first AP at a first moment, and receive a second distance parameter that is sent by a second AP and that is used to represent a second distance between the second AP and the first terminal device connected to the second AP at a second moment, wherein the first terminal device is connected to the first AP at the first moment, the first terminal device is connected to the second AP at the second moment, and the first AP and the second AP are a same AP or different APs; and receive a status parameter of the first terminal device within a time from the first moment to the second moment, wherein the status parameter comprises speed information of the first terminal device within the time from the first moment to the second moment, and an included angle between a reference direction and a direction from first coordinates of the first terminal device at the first moment to second coordinates of the first terminal device at the second moment; and
a processor, configured to determine the first coordinates and/or the second coordinates based on pre-obtained coordinates of the first AP, pre-obtained coordinates of the second AP, the first distance parameter, the second distance parameter, and the status parameter.

14. The positioning apparatus according to claim 13, wherein the positioning apparatus further comprises a transmitter, wherein
the transmitter is configured to: before the receiver receives the first distance parameter and the second distance parameter, send request information to the first AP and the second AP, wherein the request information is used to request the first distance parameter, the second distance parameter, and the status parameter from the APs; and
correspondingly, the receiver is configured to: receive a first status parameter that is sent by the first AP and that is of the first terminal device at the first moment, and receive a second status parameter that is sent by the second AP and that is of the first terminal device at the second moment, wherein the status parameter comprises the first status parameter and the second status parameter.

15. The positioning apparatus according to claim 13, wherein the positioning apparatus further comprises a transmitter, wherein
the transmitter is configured to: before the receiver receives the first distance parameter and the second distance parameter, send first request information to the first AP and the second AP, wherein the first request information is used to request the first distance parameter and the second distance parameter from the first AP and the second AP; and send second request information to the first terminal device, wherein the second request information is used to request the status parameter from the first terminal device; and
correspondingly, the receiver is configured to receive the status parameter that is sent by the first terminal device and that is of the first terminal device within the time from the first moment to the second moment.

16. The positioning apparatus according to any one of claims 13 to 15, wherein the receiver is further configured to: before receiving the first distance parameter and the second distance parameter, receive a positioning request sent by the first terminal device.

17. The positioning apparatus according to claim 15, wherein the positioning apparatus further comprises a transmitter;
the receiver is further configured to receive connection information of the first terminal device sent by the first AP;
the transmitter is configured to initiate a connection request to the first terminal device based on the connection information; and
the receiver is further configured to: after the positioning apparatus establishes a connection to the first terminal device, receive capability information sent by the first terminal device, wherein the capability information is used to represent whether the first terminal device can provide the status parameter.

18. The positioning apparatus according to any one of claims 13 to 17, wherein the first distance parameter and the second distance parameter are distance parameters that are obtained based on a fine timing measurement FTM mechanism.

19. The positioning apparatus according to any one of claims 13 to 18, wherein the positioning apparatus is an access point AP, an access controller AC, or an optical line terminal OLT.

20. An access point AP, comprising:
a processor, configured to obtain a first distance parameter that is used to represent a first distance between a first terminal device connected to the AP and the AP at a first moment, wherein the first distance parameter is used to determine first coordinates of the first terminal device at the first moment; and
a transmitter, configured to send the first distance parameter to a positioning apparatus that manages the AP.

21. The AP according to claim 20, wherein the processor is further configured to obtain a second distance parameter that is used to represent a second distance between the first terminal device connected to the AP and the AP at a second moment, wherein the second distance parameter is used to determine second coordinates of the first terminal device at the second moment; and
the transmitter is further configured to send the second distance parameter to the positioning apparatus that manages the AP.

22. The AP according to claim 20, wherein the AP further comprises a receiver, wherein
the receiver is configured to receive a first status parameter that is sent by the first terminal device and that is of the first terminal device at the first moment, wherein the first status parameter is used to determine first coordinates of the first terminal device at the first moment; and
the transmitter is further configured to send the first status parameter to the positioning apparatus.

23. The AP according to claim 21, wherein the AP further comprises a receiver, wherein
the receiver is configured to receive a first status parameter of the first terminal device at the first moment and a second status parameter of the first terminal device at the second moment that are sent by the first terminal device, wherein the first status parameter and the second status parameter are used to determine first coordinates of the first terminal device at the first moment and second coordinates of the first terminal device at the second moment; and
the transmitter is further configured to send the first status parameter and the second status parameter to the positioning apparatus.

24. The AP according to any one of claims 20 to 23, wherein the AP further comprises a receiver; and
the processor is configured to: send, by using the transmitter, a fine timing measurement FTM frame to the first terminal device at the first moment; receive, by using the receiver, a test response that is sent by the first terminal device based on the FTM frame; and determine the first distance parameter based on the first moment and a moment at which the test response is received.

25. The AP according to claim 22 or 23, wherein the receiver is further configured to: before the AP receives the first status parameter, receive capability information of the first terminal device sent by the first terminal device, wherein the capability information is used to represent whether the first terminal device can provide the first status parameter.
